# EUROPÄISCHE PATENTSCHRIFT

(11) **EP 2 597 492 B1**
(45) Veröffentlichungstag und Bekanntmachung des Hinweises auf die Patenterteilung: **26.03.2014**
(21) Anmeldenummer: 12000660.6
(22) Anmeldetag: 01.02.2012
(51) Int. Cl.: G02B 1/04, B29D 11/00

(54) **Silikon-Kontaktlinse**
Silicone contact lens
Lentille de contact en silicone

(43) Veröffentlichungstag der Anmeldung: 29.05.2013
(73) Patentinhaber: LensWista AG, 12489 Berlin (DE)
(72) Erfinder: Görne, Martin, 22337 Hamburg (DE); Kordick, Thomas, 63773 Goldbach (DE)
(74) Vertreter: Diehl & Partner GbR

(56) Entgegenhaltungen:
- EP-A2- 0 908 476
- DE-B1- 2 414 928
- US-A- 4 285 890
- US-A- 5 466 147
- US-B1- 6 444 145

## Beschreibung

Die vorliegende Anmeldung bezieht sich auf eine "*weiche*" Kontaktlinse mit hervorragenden Trageeigenschaften.

Herkömmliche Kontaktlinsen, z. B. die aus der deutschen Gebrauchsmusterschrift G 87 10 765 U1 bekannte, weisen einen radial inneren Teil aus einem härteren, und einen radial äußeren Teil aus einem weicheren Material auf. Die Innenfläche ist vollständig konkav und die Außenfläche vollständig konvex, d. h. beide Flächen weisen eine positive Gauß'sche Krümmung auf. Diese bekannte Linse ist hinsichtlich ihres Tragekomforts nicht befriedigend.

Aus dem Dokument US 4,285,890 ist ein Verfahren zur Herstellung von Silikon-Kontaktlinsen bekannt, demgemäß eine zweiteilige Form verwendet wird, deren Komponenten in Kantenkontakt miteinander stehen. Das Vorläufermaterial wird in den zwischen den Formteilen gebildeten Hohlraum gefüllt und durch Erwärmen darin ausgehärtet.

Die Erfindung setzt sich zum Ziel, ein Verfahren zur Herstellung einer Kontaktlinse mit gutem oder hervorragendem Tragekomfort, sowie die so hergestellte Kontaktlinse bereitzustellen.

Gemäß einem ersten Aspekt wird das Problem gelöst durch ein Verfahren gemäß Anspruch 1. Dadurch wird das Auftreten einer Schnittkante, die als störend empfunden werden könnte, vermieden. Gemäß einem zweiten Aspekt löst die so hergestellte Kontaktlinse gemäß Anspruch 7 das Problem.

Durch deren Randkontur gleitet die Linse besonders leicht auf den Tränenflüssigkeitsfilm auf.

Weitere Merkmale der Erfindung ergeben sich aus der nachfolgenden Beschreibung von Ausführungsbeispielen in Verbindung mit den Ansprüchen sowie den Figuren. Die Erfindung ist nicht auf die beschriebenen Ausführungsbeispiele beschränkt, sondern durch den Umfang der beiliegenden Patentansprüche bestimmt. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung von Ausführungsbeispielen wird auf die beiliegenden Figuren Bezug genommen, von denen
- Figur 1: eine schematische Querschnitts-Darstellung einer auf der Hornhaut eines Auges angeordneten Kontaktlinse,
- Figur 2: eine schematische Ausschnittvergrößerung eines Randbereichs der Kontaktlinse aus Figur 1,
- Figur 3: eine elektronenmikroskopische Aufnahme des Randbereichs der Kontaktlinse,
- Figur 4: ein Flussdiagramm für ein Herstellungsverfahren der erfindungsgemäßen Kontaktlinse, und
- Figur 5: eine Querschnitts-Ansicht einer zur Herstellung nach Figur 4 geeigneten Molding-Vorrichtung zeigt.

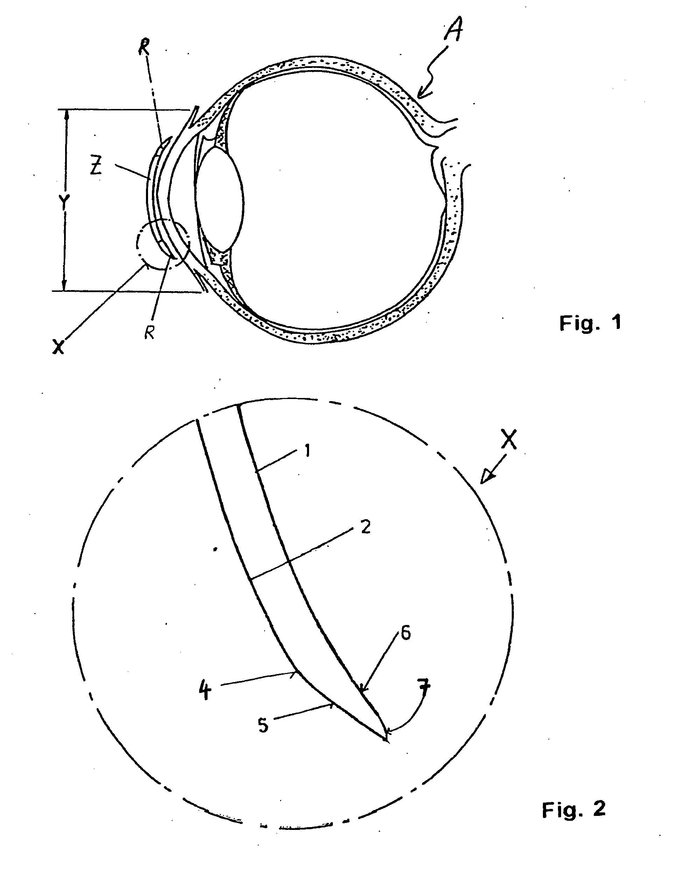

Die allgemeine Form einer Kontaktlinse ist in den Figuren 1 und 2 dargestellt: Die der Hornhaut zugewandte, in Benutzung auf einem Tränenflüssigkeitsfilm schwimmende Innenfläche 1 ist im zentralen Bereich Z konkav, und zwar rotationssymmetrisch-asphärisch mit einer Konuskonstanten von etwa -0.1 bis -0.5, also etwas elliptisch zugespitzt. Prinzipiell kann diese Fläche aber auch von der Rotationssymmetrie abweichen, wenn die physiologischen Bedingungen das erfordern. Die Außenfläche 2 der Linse ist naturgemäß konvex mit einem betragsmäßig etwas von jenem der Innenfläche abweichenden Radius, um die gewünschte dioptrische Wirkung bereitzustellen. Im Außenrandbereich R weichen die Krümmungen bzw. Radien von den zentralen Werten in folgender Weise ab: Auf der Außenfläche schließt sich radial an den zentralen Bereich ein ringförmiger Bereich 4 mit stärkerer (Einwärts-)Krümmung, also kleinerem Radius an. An diesen kann sich außen ein wiederum schwächer gekrümmter, sogar konischer (also ungekrümmter) oder geringfügig auswärts (also negativ) gekrümmter Bereich 5 anschließen. Betragsmäßig ist hier die Krümmung aber immer kleiner (d. h. der Radius größer) als in dem erstgenannten Übergangsbereich 4, d. h. die Linse läuft glatt aus.

Die Innenfläche 1 weist radial an den zentralen Bereich mit der elliptischen Fläche anschließend ebenfalls einen ringförmiger Bereich auf, der aber geringer gekrümmt, also flacher ist, was einem größeren Krümmungsradius in diesem Bereich entspricht. Hier ist der Krümmungsradius in einer Schnittebene gemeint, die die optische Achse der Linse enthält. Die von den Innenfläche und der Schnittebene gebildete Linie durchläuft einen Wendepunkt 6, d. h. die Krümmung der Linie wird zunächst Null und dann positiv. Für die Gauß'sche Flächenkrümmung bedeutet dies einen Wechsel zu negativen Werten. An diesen Bereich schließt sich dann der Bereich 7 an, wo die Innenfläche der Kontaktlinse sich an die globale Tangentialebene anschmiegt; hier ist dann die Krümmung in der zur radialen Schnittebene senkrechten Hauptkrümmungsebene Null, so dass die Gauß'sche Flächenkrümmung Null wird und noch weiter außen im unmittelbaren Kantenbereich wieder nach positiv wechselt.

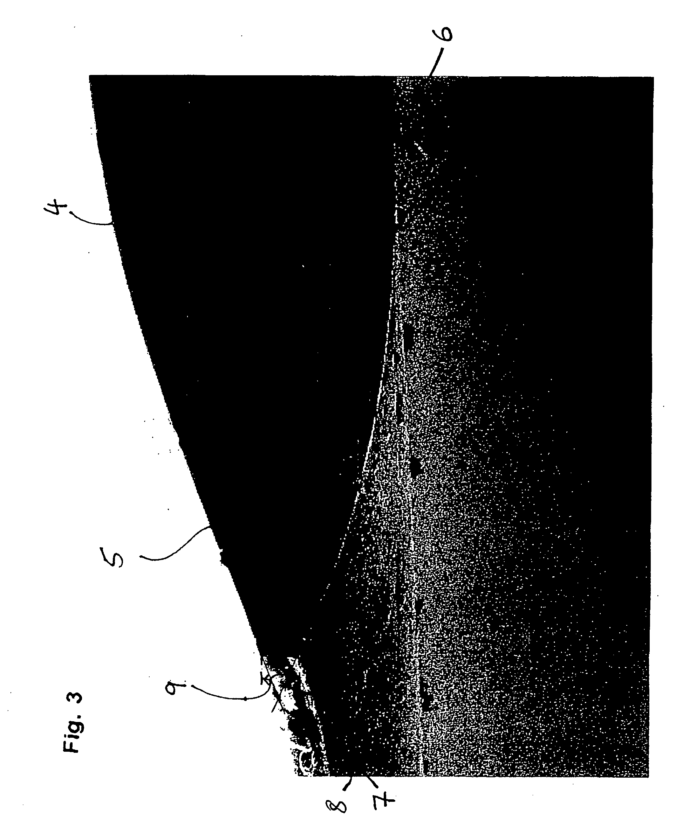

Zwischen diesen beiden Krümmungswechselpunkten 6 und 7 (in der Schnittebene) bzw. -linien (auf der Oberfläche) liegt ein Bereich, in welchem sich die Kontaktlinse allmählich, von radial innen nach außen betrachtet, von der Hornhaut abhebt. Dieser Bereich ist für den Tragekomfort ausschlaggebend. Wie die Erfinder erkannt haben, sollte in diesem Bereich weder eine allzu scharfe Kante ausgebildet sein, die den auf der Hornhaut befindlichen Tränenflüssigkeitsfilm unterbrechen oder gar in die Hornhaut einschneiden könnte; noch sollte der Randbereich eine nach auswärts vorspringende, stark gekrümmte Kante ("*Skispitzen-Profil*") aufweisen, die das beim Lidschlag von außen aufgleitende Augenlid irritieren könnte. Vielmehr wird durch die erfindungsgemäß sanft auf einen schnittkantenfreien Außenrand zu laufenden ringförmigen Bereiche (siehe Figur 2) erreicht, dass ein störungsfreies Aufgleiten der Kontaktlinse auf den Tränenflüssigkeitsfilm und gleichzeitig ein störungsfreies Aufgleiten des Augenlids auf die Kontaktlinse ermöglicht ist. Es wurde gefunden, dass der Radius der Innenfläche, also die inverse Krümmung, entlang der radialen Schnittfläche, beispielsweise zwischen 0,1 und 4 mm liegen kann, oder auch einerseits über 0,5 mm oder/und andererseits unter 2 mm. Die radiale Ausdehnung des negativ gekrümmten Flächenbereichs kann 1 µm bis 1 mm betragen, zum Beispiel einerseits über 10 µm oder/und andererseits unter 100 µm. Die Außenkante selbst kann statt eines spitzen Winkels 8 zwei stumpfe aufweisen, zwischen denen sich ein z. B. 10-30 µm messender annähernd zylindrischer Außenrandbereich 9 erstreckt, wie dies in Figur 3 zu erkennen ist.

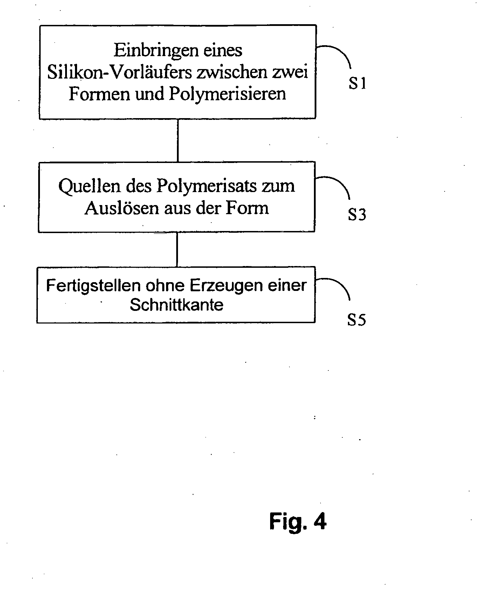

In Figur 4 ist ein Flussdiagramm eines erfindungsgemäßen Verfahrens dargestellt. Zunächst werden eine weibliche und eine männliche Form bereitgestellt, und ein Vorläufermaterial für Poly(dimethylsiloxan) wird in die weibliche Form eingebracht, mit dem männlichen Teil verschlossen und bei einer Temperatur zwischen 15°C-160°C für eine Dauer von 12-720 Minuten polymerisiert S1 (molding). Nach dem Verschließen werden die beiden Formteile gegeneinander um 180° oder einen anderen hinreichend großen Winkel (>20°) verdreht, solange die Reaktionsmischung gerade noch viskos ist (über 1000 cP; typisch ca. 4000 cP), so dass überschüssiges Silikon zuverlässig abgetrennt und in den Ringraum zwischen den Formteilen verdrängt wird. Bei dieser Abschnürung wird durch Einfluss der Oberflächenspannung auch die oben beschriebene Randkontur erzeugt, die den Verzicht auf eine Randbeschneidung oder andere Randbearbeitung, die eine Schnittkante erzeugt (z.B. Stanzen), ermöglicht. Zum Demolden wird die Kontaktlinse mit einem Alkan wie z. B. Hexan oder einem anderen unpolaren oder wenig polaren Lösungsmittel angequollen S3, so dass sie sich S5 ohne mechanische Einwirkung aus der Molding-Form und von den Herstellungsteilen löst. Das Dipolmoment des Lösungsmittels sollte dazu nicht mehr als 0,2 Debye betragen. Zur Unterstützung kann ein Ultraschallbad eingesetzt werden. Das Ausgangsmaterial kann ein flüssiges 2-Komponenten-Silikon von NuSil mit einem DK-Wert von über 700 barrer sein. Gewünschtenfalls wird die Linse nach Ausdampfen des Lösungsmittels im Vakuum bei über 120°C dampfsterilisiert.

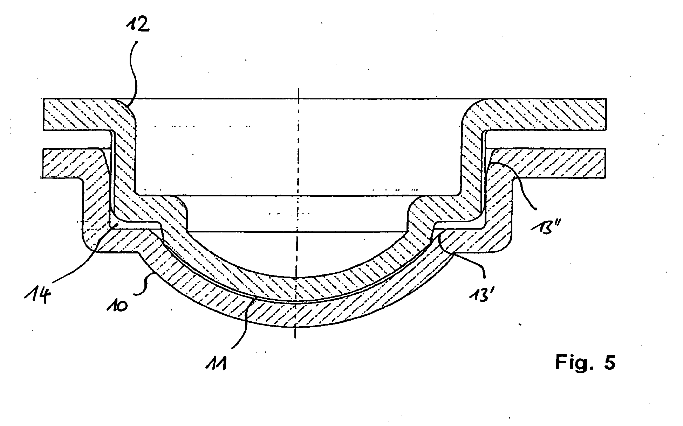

In Figur 5 ist eine zweiteilige Molding-Form gezeigt, die zur Durchführung des oben beschriebenen Verfahren geeignet ist. Der untere, weibliche Teil 10 nimmt dabei zunächst die Reaktionsmischung auf und wird dann mit dem oberen, männlichen Teil 12 verschlossen, wobei ein mit der Reaktionsmischung gefüllter Raum 11 zwischen ihnen verbleibt. Der untere Teil 10 weist Formschrägen 13', 13" auf, die das Zusammenfügen und das Voneinander-Trennen der Formteile 10 und 12 erleichtern. Der Ringraum ist mit 14 bezeichnet.

Aus dem Verfahrensablauf ergibt sich eine Irregularität des Außenrandes insofern, als er von einer exakten Kreislinie abweicht, anders als dies z. B. von gestanzten Linsenkonturen bekannt ist. Da auch die Hornhaut niemals genau reguläre Kontur hat, ist diese Abweichung von einer Idealgestalt nicht nur nicht nachteilig, sondern hat sogar günstige Auswirkungen auf den Tragekomfort. Das Ausmaß der Irregularität kann dadurch quantifiziert werden, dass man der Projektion des Außenrandes rechnerisch, nach dem Kriterium der minimalen Abweichungsquadratsumme, eine ideal annähernde Kreisform zuordnet. Das mittlere Abweichungsquadrat ist dann ein Maß für die Irregularität, und beträgt mindestens 5000 µm² (umgerechnet auf Beträge: etwa 1 % des halben Linsendurchmessers), kann aber in Ausführungsformen auch mehr als 1000 µm² oder mehr als 10000 µm² betragen.

In den nachfolgenden Ansprüchen wird unter einem "über *wiegenden Bestehen*" ein massemäßiger Anteil von mehr als 50 % verstanden, im Besonderen von über 90 % bis zur Gänze. Unter "*Krümmung*" ist jeweils der inverse Krümmungsradius, d. h. des Radius des Schmiegekreises zu verstehen, wobei das Vorzeichen bei konvexen Flächen positiv und bei konkaven Flächen negativ ist. Die Gauß'sche Flächenkrümmung ist das Produkt der beiden Hauptkrümmungen, also dann negativ, wenn die beiden Hauptkrümmungen unterschiedliche Vorzeichen aufweisen (Sattelfläche), und dann Null, wenn eine oder beide Hauptkrümmungen Null sind (z. B. Zylinder-und Konusfläche).

Der Fachmann wird erkennen, dass Abweichungen von den oben beschriebenen Ausführungsformen möglich sind, ohne den Schutzbereich der beigefügten Ansprüche zu verlassen.

## Patentansprüche

1. Verfahren zur Herstellung einer Silikon-Kontaktlinse, wobei ein weiblicher Formteil und ein männlicher Formteil bereitgestellt werden, und ein Silikon-Vorläufermaterial zwischen die Formteile eingebracht und dort polymerisiert wird,
**dadurch gekennzeichnet, dass**
bei noch flüssiger Reaktionsmischung die beiden Formteile gegeneinander rotiert werden, um den zur Bildung der Kontaktlinse vorgesehenen Teil der Reaktionsmischung von überschüssigem Material abzuschnüren, und die polymerisierte Kontaktlinse mittels einer die Kontaktlinse quellenden Flüssigkeit aus der Form gelöst und ohne Erzeugung einer Schnittkante fertiggestellt wird.

2. Verfahren nach Anspruch 1, wobei die Formhälften um über 20° verdreht werden, wenn die Reaktionsmischung eine Viskosität von über 1000 cP aufweist.

3. Verfahren nach Anspruch 1 oder 2, wobei zum Auslösen der Kontaktlinse aus der Form eine unpolare Flüssigkeit eingesetzt wird.

4. Verfahren nach Anspruch 3, wobei das Dipolmoment der unpolaren Flüssigkeit weniger als 0,2 Debye beträgt.

5. Verfahren nach einem der Ansprüche 1 bis 4, wobei die ausgelöste Kontaktlinse mit einer polaren Flüssigkeit behandelt wird.

6. Verfahren nach Anspruch 5, wobei das Dipolmoment der polaren Flüssigkeit mehr als 1 Debye beträgt.

7. Silikon-Kontaktlinse, hergestellt nach einem der voranstehenden Ansprüche, wobei ein radialer Querschnitt der Kontaktlinse auf der Innenfläche der Kontaktlinse einen Randbereich zwischen einem Wendepunkt und der Außenkante aufweist, in dem die Querschnittskontur konvex ist, **dadurch gekennzeichnet, dass** der Radius der konvexen Querschnittskontur über 0,5 mm beträgt.

8. Kontaktlinse nach Anspruch 7, wobei das Silikon Poly (dimethylsiloxan) ist.

9. Kontaktlinse nach Anspruch 7 oder 8, wobei der Randbereich der Kontaktlinse 1 µm bis 1 mm breit ist.

10. Kontaktlinse nach Anspruch 9, wobei der Randbereich der Kontaktlinse 0,01 mm bis 0,1 mm breit ist.

11. Kontaktlinse nach einem der Ansprüche 7 bis 10, wobei der Außenrand der Kontaktlinse eine Irregularität aufweist, derart, dass eine dem Außenrand nach dem Kriterium des geringsten mittleren Abweichungsquadrat zugeordnete Kreislinie ein mittleres Abweichungsquadrat von mindestens 5000 µm² aufweist.

12. Kontaktlinse nach einem der Ansprüche 7 bis 11, wobei der Radius der konvexen Querschnittskontur 0,1 - 10 mm beträgt.

13. Kontaktlinse nach Anspruch 12, wobei der Radius der konvexen Querschnittskontur 0,1 - 4 mm beträgt.

14. Kontaktlinse nach Anspruch 13, wobei der Radius der konvexen Querschnittskontur 0,1 - 2 mm beträgt.

15. Kontaktlinse nach einem der Ansprüche 7 bis 14, wobei der Randbereich in einem Bereich der Innenfläche liegt, der eine negative Gauß'sche Flächenkrümmung hat.

## Claims

1. A process for manufacturing a silicone contact lens, wherein a female mold part and a male mold part are provided and a silicone precursor material is introduced in between the mold parts and is polymerized in place,
**characterized in that**
while the reaction mixture is still liquid, the mold parts are rotated with respect to one another for separating the portion of the reaction mixture intended for forming the contact lens from excess material, and the polymerised contact lens is released from the mold by means of a liquid swelling the contact lens and finalized without generating a cutting edge.

2. The process of claim 1, wherein the mold halves are rotated by more than 20°, when the reaction mixture has a viscosity of more than 1000 cP.

3. The process of claim 1 or 2, wherein a non-polar liquid is used for releasing the contact lens from the mold.

4. The process of claim 3, wherein the dipole moment of the non-polar liquid is less than 0.2 Debye.

5. The process of one of claims 1 to 4, wherein the released contact lens is treated with a polar liquid.

6. The process of claim 5, wherein the dipole moment of the polar liquid is more than 1 Debye.

7. A silicone contact lens, manufactured according to one of the preceding claims, wherein a radial cross-section of the contact lens on the inner surface of the contact lens has a rim portion between a point of inflection and the outer edge, in which the cross-sectional contour is convex, **characterized in that** the radius of the convex cross-sectional contour is more than 0,5 mm.

8. The contact lens of claim 7, wherein the silicone is poly(dimethylsiloxane).

9. The contact lens of claim 7 or 8, wherein the rim portion is 1 µm to 1 mm in width.

10. The contact lens of claim 9, wherein the rim portion is 0.01 mm to 0.1 mm in width.

11. The contact lens of one of claims 7 to 10, wherein the outer edge of the contact lens has an irregularity insomuch as a circle line ascribed to the outer edge according to the criterion of least square deviations has an average squared deviation of at least 5000 µm².

12. The contact lens of one of claims 7 to 11, wherein the radius of the convex cross-sectional contour is 0.1-10 mm.

13. The contact lens of claim 12, wherein the radius of the convex cross-sectional contour is 0.1 - 4 mm.

14. The contact lens of claim 13, wherein the radius of the convex cross-sectional contour is 0.1 - 2 mm.

15. The contact lens of one of claims 7 to 14, wherein the rim portion is located in a portion of the inner surface having a negative Gaussian surface curvature.

## Revendications

1. Procédé de production d'une lentille de contact en silicone, dans lequel une pièce de moule femelle et une pièce de moule mâle sont fournies et un matériau précurseur en silicone est appliqué entre les pièces de moules et y est polymérisé,
**caractérisé en ce que**
dans un mélange réactionnel encore liquide, on fait tourner les deux pièces de moules l'une par rapport à l'autre pour séparer la partie prévue pour la formation de la lentille de contact du mélange réactionnel, du matériau excédentaire et la lentille de contact polymérisée est séparée du moule au moyen d'un liquide gonflant la lentille de contact et est produite sans former de bord de coupe.

2. Procédé selon la revendication 1, dans lequel les moitiés de moules sont tournées de 20° lorsque le mélange réactionnel présente une viscosité supérieure à 1000 cP.

3. Procédé selon la revendication 1 ou 2, dans lequel pour détacher la lentille de contact du moule, on utilise un liquide non polaire.

4. Procédé selon la revendication 3, dans lequel le moment dipolaire du liquide non polaire est inférieur à 0,2 debye.

5. Procédé selon l'une des revendications 1 à 4, dans lequel la lentille de contact détachée est traitée avec un liquide polaire.

6. Procédé selon la revendication 5, dans lequel le moment dipolaire du liquide polaire est supérieur à 1 debye.

7. Lentille de contact en silicone, fabriquée selon l'une des revendications précédentes, dans laquelle une section radiale de la lentille de contact présente sur la surface interne de la lentille de contact, une zone de bordure entre un point d'inflexion et le bord externe, dans laquelle le contour de section est convexe, **caractérisée en ce que** le rayon du contour de section convexe est supérieur à 0,5 mm.

8. Lentille de contact selon la revendication 7, dans laquelle la silicone est le poly(diméthylsiloxane).

9. Lentille de contact selon la revendication 7 ou 8, dans laquelle la zone de bordure de la lentille de contact a une largeur de 1 µm à 1 mm.

10. Lentille de contact selon la revendication 9, dans laquelle la zone de bordure de la lentille de contact a une largeur de 0,01 mm à 0,1 mm.

11. Lentille de contact selon l'une des revendications 7 à 10, dans laquelle le bord externe de la lentille de contact présente une irrégularité, de telle sorte qu'une ligne circulaire affectée au bord externe selon le critère du carré moyen de l'écart le plus faible présente un carré moyen de l'écart d'au moins 5000 µm².

12. Lentille de contact selon l'une des revendications 7 à 11, dans laquelle le rayon du contour de section convexe est de 0,1 à 10 mm.

13. Lentille de contact selon la revendication 12, dans laquelle le rayon du contour de section convexe est de 0,1 à 4 mm.

14. Lentille de contact selon la revendication 13, dans laquelle le rayon du contour de section convexe est de 0,1 à 2 mm.

15. Lentille de contact selon l'une des revendications 7 à 14, dans laquelle la zone de bordure se situe dans une région de la surface intérieure qui a une courbure de surface de Gauss négative.
